(19) **Europäisches Patentamt / European Patent Office / Office européen des brevets**

(11)  **EP 2 877 565 B1**

(12)  # EUROPÄISCHE PATENTSCHRIFT

(45) Veröffentlichungstag und Bekanntmachung des Hinweises auf die Patenterteilung:
**13.09.2017  Patentblatt 2017/37**

(21) Anmeldenummer: **13737227.2**

(22) Anmeldetag: **15.07.2013**

(51) Int Cl.:
*C11D 3/37* *(2006.01)*      *C11D 17/00* *(2006.01)*
*C02F 5/10* *(2006.01)*      *C08G 63/12* *(2006.01)*

(86) Internationale Anmeldenummer:
**PCT/EP2013/064877**

(87) Internationale Veröffentlichungsnummer:
**WO 2014/016148 (30.01.2014 Gazette 2014/05)**

(54) **VERWENDUNG VON VERZWEIGTEN POLYESTERN AUF BASIS VON ZITRONENSÄURE ALS ZUSATZSTOFF IN SPÜLMITTELN, REINIGUNGSMITTELN, WASCHMITTELN ODER EINER FORMULIERUNG ZUR WASSER-BEHANDLUNG**

USE OF BRANCHED POLYESTERS ON THE BASIS OF CITRIC ACID AS ADDITIVE IN DETERGENTS, CLEANING AGENTS, WASHING AGENTS OR A FORMULA FOR TREATING WATER

UTILISATION DE POLYESTERS RAMIFIÉS À BASE D'ACIDE CITRIQUE COMME ADJUVANT DANS DES PRODUITS DE RINCAGE, DÉTERGENTS, PRODUITS DE LAVAGE OU DANS UNE COMPOSITION DE TRAITEMENT DE L'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.07.2012  EP 12177751**

(43) Veröffentlichungstag der Anmeldung:
**03.06.2015  Patentblatt 2015/23**

(73) Patentinhaber: **BASF SE**
**67056 Ludwigshafen am Rhein (DE)**

(72) Erfinder:
 • **DETERING, Jürgen**
   **67117 Limburgerhof (DE)**
 • **HABERECHT, Monika**
   **67063 Ludwigshafen (DE)**
 • **MÜLLER-CRISTADORO, Anna**
   **65529 Waldems (DE)**
 • **WEBER, Heike**
   **68239 Mannheim (DE)**

(56) Entgegenhaltungen:
**WO-A1-92/16493**      **WO-A1-93/22362**
**WO-A1-2011/064153**   **WO-A1-2012/028496**
**DE-A1- 1 617 122**    **US-A- 5 652 330**
**US-B1- 8 182 796**

 • **DATABASE WPI Week 199423 Thomson Scientific, London, GB; AN 1994-186445 XP002691249, -& JP 6 122759 A (NIPPON SHOKUBAI CO LTD) 6. Mai 1994 (1994-05-06)**

EP 2 877 565 B1

**Beschreibung**

Die vorliegende Erfindung betrifft die Verwendung von verzweigten Polyestern erhältlich durch Polykondensation von Zitronensäure mit mindestens einem Polyalkohol mit mindestens 2 und bis zu 6 Hydroxylgruppen, sowie optional mit Polycarbonsäurekomponente als Zusatzstoff in Spülmitteln, Reinigungsmitteln, Waschmitteln oder einer Formulierung zur Wasserbehandlung und Gemische enthaltend solche verzweigten Polyester. Gegenstand der Erfindung sind weiterhin die Verwendung von hydrophob-modifizierten verzweigten Polyestern, sowie das Verfahren zur Reinigung, zum Spülen, zum Waschen oder zur Wasserbehandlung unter Einsatz solcher verzweigter Polyester.

WO 93/22362 beschreibt ein Verfahren zur Herstellung von Polyestern aus Zitronensäure und Polyhydroxyverbindungen und ihre Verwendung als Zusatz zu phosphatarmen oder phosphatfreien Wasch- und Reinigungsmitteln. Die Polyhydroxyverbindungen sind Oligo- und Polysaccharide, modifizierte Oligo- und Polysaccharide sowie Polyvinylalkohole.

In der US 5,652,330 werden Polykondensate von Zitronensäure beschrieben, die entweder Polykondensate der Zitronensäure mit sich selbst darstellen oder in denen Alkoholkomponenten im Unterschuss mit einem Molverhältnis von 100: 1 bis 2.5 :1 einkondensiert werden. Die dort beschriebenen Polykondensate werden in Wasch- und Reinigungsmitteln insbesondere zur Verhinderung von Ablagerungen verwendet.

In der WO 2012/028496 werden verzweigte Polyester, die Zitronensäure als Aufbaukomponente enthalten, Verfahren zur Herstellung solcher Polyester sowie ihre Verwendung zur Solubilisierung schwerlöslicher, basischer pharmazeutischer Wirkstoffe beschrieben.

WO 92/16493 beansprucht Zitronensäureester von Polyhydroxyverbindungen wie Polyglycerin oder Zuckeralkoholen und ihre Verwendung in Wasch- und Reinigungsmitteln.

US-B 8,182,796 offenbart hydrophob modifizierte verzweigte Polyester basierend auf Zitronensäure, die Esterketten mit zwei unterschiedlichen Molekulargewichten besitzen. Dabei ist die eine Esterkette fest und die andere flüssig, was in einem festen Polymer mit besonderen Fließeigenschaften resultiert. Die offenbarten Polyester werden als Additive in Körperpflegeprodukten wie Sonnenschutzmittel verwendet.

Durch radikalische Polymerisation erhältliche Polymere aus carboxylgruppenhaltigen und/oder sulfonsäuregruppenhaltigen Monomeren sind seit einigen Jahren wichtiger Bestandteil von phosphathaltigen und phosphatfreien maschinellen Geschirrspülmitteln. Durch ihre schmutzdispergierende und belagsinhibierende Wirkung leisten sie einen erheblichen Beitrag zur Reinigungs- und Klarspülleistung der maschinellen Geschirrspülmittel. So sorgen sie dafür, dass auf dem Spülgut keine Salzablagerungen der härtebildenden Calcium- und Magnesiumionen zurückbleiben. Häufig werden Homopolymere aus Acrylsäure oder Copolymere aus Acrylsäure und 2-Acrylamido-2-methylpropansulfonsäure für diesen Zweck eingesetzt.

Diese Polymere finden auch in wasserführenden Systemen als Mittel zur Verhinderung mineralischer Ablagerungen wie z.B. Calcium- und Magnesiumsulfat, Magnesiumhydroxid, Calcium- und Bariumsulfat und Calciumphosphat auf Wärmeübertragungsflächen oder in Rohrleitungen Verwendung. Als wasserführende Systeme sind hier u.a. Kühl- und Kesselspeisewassersysteme und industrielle Prozesswässer zu nennen. Aber auch in der Meer- oder Brackwasserentsalzung durch Destillation und durch Membranverfahren wie Umkehrosmose oder Elektrodialyse werden diese Polymere als Belagsinhibitoren eingesetzt.

Ein Nachteil dieser durch radikalische Polymerisation erhältlichen Polymere aus carboxylgruppenhaltigen und/oder sulfonsäuregruppenhaltigen Monomeren ist, dass sie nicht biologisch abbaubar sind. Biologisch abbaubare Polymere wie beispielsweise Polyasparaginsäure haben sich jedoch auf Grund hoher Herstellkosten als kommerziell nur schwer durchsetzbar erwiesen.

Die Aufgabe der Erfindung war es daher, Stoffe zur Verfügung zu stellen, die sich für Reinigungszwecke, insbesondere als Zusatz zu phosphathaltigen und phosphatfreien Reinigerformulierungen für die maschinelle Geschirrreinigung, und zum Zwecke der Belagsinhibierung in wasserführenden Systemen einsetzen lassen und biologisch abbaubar sind. Eine weitere Aufgabe der Erfindung war es Stoffe zur Verfügung zu stellen, die sich leicht in Formulierungen für Reinigungszwecke in ihren verschiedenen Darreichungsformen einarbeiten lassen.

Diese und andere Aufgaben werden, wie aus dem Offenbarungsgehalt der vorliegenden Erfindung ersichtlich, durch die verschiedenen Ausführungsformen der Erfindung gelöst, insbesondere durch die Verwendung von verzweigten Polyestern erhältlich durch Polykondensation von

    a. Zitronensäure (Komponente A) mit
    b. mindestens einem Polyalkohol mit mindestens 2 und bis zu 6 Hydroxylgruppen (Komponente B) und
    c. optional einer Polycarbonsäurekomponente (Komponente C) und optional Umsetzung mit
    d. mindestens einer Komponente D ausgewählt aus der Gruppe bestehend aus: C6-C30 Alkyl-oder Alkenylcarbonsäuren, C6-C30 Alkyl-oder Alkenylalkohole, C6-C30 Alkyl-oder Alkenylamine, C6-C30 aliphatische Isocyanate während der Polykondensation oder nachträglich

als Zusatzstoff in Spülmitteln, Reinigungsmitteln, Waschmitteln oder einer Formulierung zur Wasserbehandlung, wobei die verzweigten Polyester ein Molekulargewicht $M_n$ von 400 bis 5 000 g/mol, ein Molekulargewicht $M_w$ von 500 bis 50 000 g/mol, eine Säurezahl von 60 bis 600 mg KOH/g Polymer und eine Glasübergangstemperatur im Bereich von -50 bis +50 °C aufweisen, wobei das Molverhältnis von Zitronensäure zu Polyalkohol 3,5 : 1,0 bis 1,0 : 1,5 beträgt, und wobei gegebenenfalls der Anteil an Polycarbonsäure maximal 30 Mol-% gegenüber der eingesetzten Menge an Zitronensäure beträgt.

In einer weiteren bevorzugten Ausführungsform des erfindungsgemäßen Verfahrens werden hydrophob-modifizierte verzweigte Polyester eingesetzt.

Unter hydrophob-modifizierten verzweigten Polyestern werden im Rahmen der vorliegenden Erfindung modifizierte Polyester aus Zitronensäure und mindestens einer Polyhydroxyverbindung und optional einer Polycarbonsäure verstanden, in denen die zugänglichen Hydroxy-und/oder Carboxylgruppen zumindest teilweise weiter modifiziert sind, also mit Reagentien umgesetzt sind, die die Eigenschaften der so modifizierten Polyester verändern. Eigenschaften sind dabei Löslichkeit, Dispergierbarkeit und Hydrophobie.

Die Modifizierung des Polyesters erfolgt bevorzugt mit den erfindungsgemäßen Polyestern aus Zitronensäure und Polyhydroxyverbindungen, wie Sie oben beschrieben sind.

Hydrophob modifizierte verzweigte Polyester aus Zitronensäure und Polyhydroxyverbindungen können erhalten werden durch Zusatz von Alkyl- oder Alkenylcarbonsäuren, von Alkyl-oder Alkenylalkoholen, von Alkyl-oder Alkenylaminen und/oder von aliphatischen Isocyanaten während der Kondensationsreaktion oder durch eine nachträgliche Umsetzung.

Die hydrophob modifizierten Polyester erweisen sich als vorteilhaft bei der Reinigung von mit Haushaltfetten stark angeschmutzten Geschirrteilen. Zusätzlich lassen sie sich leicht in feste Formen überführen. Insbesondere die Herstellung von Granulaten wird durch den Hydrophobierungsschritt erleichtert.

Besonders bevorzugt ist die Verwendung von hydrophob modifizierten verzweigten Polyestern, die durch Zusatz von Alkyl- oder Alkenylcarbonsäuren während der Kondensationsreaktion oder in einem nachfolgenden Umsetzungschritt erhalten werden.

Um einen amphiphilen Charakter zu erreichen, können die hochfunktionellen, hochverzweigten Polyester aus Zitronensäure und Polyhydroxyverbindungen (während der Kondenssationsreation oder nachträglich) auch mit hydrophoben und hydrophilen Agentien umgesetzt werden, zum Beispiel mit langkettigen Alkyl-oder Alkenylcarbonsäuren, -alkoholen,-aminen oder Isocyanaten und gleichzeitig mit mono-, di- oder höherfunktionellen Polyethylenglykolketten aufweisenden Alkoholen, Aminen, Säuren oder Isocyanaten.

Bevorzugt eignen sich hyperverzweigte Polyester.Unter hyperverzweigten Polyestern werden im Rahmen dieser Erfindung unvernetzte Polyester mit Hydroxy- und Carboxygruppen verstanden, die sowohl strukturell als auch molekular uneinheitlich sind. Unvernetzt im Rahmen dieser Schrift bedeutet, dass ein Vernetzungsgrad von weniger als 15 Gew.%, bevorzugt von weniger als 10 Gew.%, bestimmt über den unlöslichen Anteil des Polymeren, vorhanden ist.

Hyperverzweigte Polyester können auf der einen Seite ausgehend von einem Zentralmolekül analog zu Dendrimeren, jedoch mit uneinheitlicher Kettenlänge der Äste aufgebaut sein. Sie können auf der anderen Seite auch linear, mit funktionellen Seitengruppen, aufgebaut sein oder aber, als Kombination der beiden Extreme, lineare und verzweigte Molekülteile aufweisen. Zur Definition von Dendrimeren und hyperverzweigten Polymeren siehe auch P.J. Flory, J. Am. Chem. Soc. 1952, 74, 2718 und H. Frey et al., Chemistry - A European Journal, 2000, 6, No. 14, 2499.

Unter "hyperverzweigt" wird im Zusammenhang mit der vorliegenden Erfindung verstanden, dass der Verzweigungsgrad (Degree of Branching, DB) 10 bis 99,9%, bevorzugt 20 bis 99%, besonders bevorzugt 20 - 95% beträgt. Der Verzweigungsgrad DB ist dabei definiert als DB (%) = (T + Z) / (T + Z + L) x 100, mit

T     mittlere Anzahl der terminal gebundenen Monomereinheiten,
Z     mittlere Anzahl der Verzweigungen bildenden Monomereinheiten,
L     mittlere Anzahl der linear gebundenen Monomereinheiten.

Unter "dendrimer" wird im Zusammenhang mit der vorliegenden Erfindung verstanden, daß der Verzweigungsgrad 99,9 - 100% beträgt. Zur Definition des "Degree of Branching" siehe H. Frey et al., Acta Polym. 1997, 48, 30 - 35.

## Komponente A

Unter Zitronensäure werden erfindungsgemäß Zitronensäureanhydrat sowie die Hydrate der Zitronensäure verstanden, wie beispielsweise Zitronensäuremonohydrat.

## Komponente B

Als Polyalkohole eignen sich erfindungsgemäß Alkohole mit mindestens zwei Hydroxylgruppen und bis zu sechs Hydroxylgruppen. Bevorzugt kommen Diole oder Triole oder Mischungen verschiedener Diole und/oder Triole in Betracht. Geeignete Polyalkohole sind beispielsweise Polyetherole. Die Polyetherole können durch Umsetzung mit Ethylenoxid, Propylenoxid und/oder Butylenoxid erhalten werden. Insbesondere eignen sich Polyetherole auf Basis von Ethylenoxid und/oder Propylenoxid. Es können auch Gemische solcher Polyetherole eingesetzt werden.

Als Diole eignen sich beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3- und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole $HO(CH_2CH_2O)_n$-H oder Polypropylenglykole $HO(CH[CH_3]CH_2O)_n$-H, wobei n eine ganze Zahl und n $\geq$ 4 ist, Polyethylenpolypropylenglykole, wobei die Abfolge der Ethylenoxid- der Propylenoxid-Einheiten blockweise oder statistisch sein kann, Polytetramethylenglykole, vorzugsweise bis zu einem Molgewicht bis zu 5000 g/mol, Poly-1,3-Propandiole, vorzugsweise mit einem Molgewicht bis zu 5000 g/mol, Polycaprolactone oder Gemische von zwei oder mehr Vertretern der voranstehenden Verbindungen. Beispielsweise können ein bis sechs, bevorzugt ein bis vier, besonders bevorzugt ein bis drei, ganz besonders bevorzugt ein bis zwei und insbesondere ein Diol eingesetzt werden. Dabei kann eine oder auch beide Hydroxygruppen in den vorstehend genannten Diolen durch SH-Gruppen substituiert werden. Bevorzugt eingesetzte Diole sind Ethylenglykol, 1,2-Propandiol, 1,3-Propandiol, 1,4-Butandiol, 1,5-Pentandiol, 1,6-Hexandiol, 1,8-Octandiol, 1,2-, 1,3- und 1,4-Cyclohexandiol, 1,3- und 1,4-Bis(hydroxymethyl)cyclohexan, sowie Diethylenglykol, Triethylenglykol, Dipropylenglykol, Tripropylenglykol und Polyethylenglykole mit einem mittleren Molekulargewicht zwischen 200 und 1000 g/mol.

Die zweiwertigen Polyalkohole können optional noch weitere Funktionalitäten wie beispielsweise Carbonyl, Carboxy, Alkoxycarbonyl oder Sulfonyl enthalten, wie beispielsweise Dimethylolpropionsäure oder Dimethylolbuttersäure, sowie deren $C_1$-$C_4$-Alkylester, bevorzugt weisen die Alkohole jedoch keine weiteren Funktionalitäten auf.

Bevorzugte Diole sind Ethylenglykol, Diethylenglykol und Polyethylenglykol mit einem mittleren Molekulargewicht zwischen 200 und 1000 g/mol.

Als Triole oder höherfunktionelle Polyalkohole eignen sich beispielsweise Glycerin, Trimethylolmethan, Trimethylolethan, Trimethylolpropan, Bis(trimethylolpropan), Trimethylolbutan, Trimethylolpentan, 1,2,4-Butantriol, 1,2,6-Hexantriol,Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Tris(hydroxymethyl)isocyanurat, Tris(hydroxyethyl)isocyanurat (THEIC), Tris(hydroxypropyl)isocyanurat und N-[1,3-bis(hydroxymethyl)-2,5-dioxo-4-imidazolidinyl]-N,N'-bis(hydroxymethyl)harnstoff.

Bevorzugte Triole sind Trimethylolpropan, Trimethylolethan,Glycerin, Diglycerin und Triglycerinsowie deren Polyetherole auf Basis von Ethylenoxid und/oder Propylenoxid. Weiterhin eignen sich auch Zucker oder Zuckeralkohole wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, oder Inosit.

Weiterhin eignen sich tri- oder höherfunktionelle Polyetherole auf Basis tri- oder höherfunktioneller Alkohole, die durch Umsetzung mit Ethylenoxid, Propylenoxid und/oder Butylenoxid erhalten werden oder Mischungen solcher Umsetzungsprodukte.

Es ist auch möglich, Gemische von mindestens trifunktionellen Polyalkoholen einzusetzen. Beispielsweise können ein bis sechs, bevorzugt ein bis vier, besonders bevorzugt ein bis drei, ganz besonders bevorzugt ein bis zwei und insbesondere ein mindestens trifunktioneller Alkohol eingesetzt werden.

Dabei sind Ethylenglykol, 1,2-Propandiol, 1,3-Propandiol, 1,4-Butandiol, 1,5-Pentandiol, 1,6-Hexandiol sowie Diethylenglykol, Triethylenglykol, Dipropylenglykol, Tripropylenglykol, Polyethylenglykol mit einem mittleren Molekulargewicht zwischen 200 und 1000 g/mol, Glycerin, Diglycerin, Triglycerin, Trimethylolpropan, Trimethylolethan, Di(trimethylolpropan), 1,2,4-Butantriol, 1,2,6-Hexantriol, Pentaerythrit, Sucrose , Sorbit oder Glucarsäure sowie deren Polyetherole auf Basis von Ethylenoxid und/oder Propylenoxid, oder eine Mischung davon als Komponente B bevorzugt.

Besonders bevorzugt sind Diethylenglykol oder Polyethylenglykol mit einem mittleren Molekulargewicht zwischen 200 und 1000 g/mol, Trimethylolpropan, Glycerin oder Diglycerin, Triglycerin sowie deren Polyetherole auf Basis von Ethylenoxid und/oder Propylenoxid, oder eine Mischung davon

**Komponente C**

Zusätzlich zur Zitronensäure können weitere Polycarbonsäuren, insbesondere gesättigte Dicarbonsäuren, einkondensiert werden, wobei der Anteil an weiteren Polycarbonsäuren maximal 30 mol-% gegenüber der eingesetzten Menge an Zitronensäure betragen soll. Bevorzugt enthalten die Polycarbonsäuren der Komponente C keine Sulfonatgruppen.

Als gesättigte Dicarbonsäuren eignen sich beispielsweise aliphatische Dicarbonsäuren, wie Oxalsäure, Malonsäure, Bernsteinsäure, Glutarsäure, Adipinsäure, Pimelinsäure, Korksäure, Azelainsäure, Sebacinsäure, Undecan-$\alpha,\omega$-dicarbonsäure, Dodecan-$\alpha,\omega$-dicarbonsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure. Die genannten gesättigten Dicarbonsäuren können auch substituiert sein mit einem oder mehreren Resten, ausgewählt aus

$C_1$-$C_{20}$-Alkylgruppen, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, Trimethylpentyl, n-Nonyl, n-Decyl, n-Dodecyl, n-Tetradecyl, n-Hexadecyl, n-Octadecyl, oder n-Eicosyl,

$C_2$-$C_{20}$-Alkenylgruppen, beispielsweise Butenyl, Hexenyl, Octenyl, Decenyl, Dodecenyl, Tetradecenyl, Hexadecenyl, Octadecenyl oder Eicosenyl,$C_3$-$C_{12}$-Cycloalkylgruppen, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl;

Alkylengruppen wie Methylen oder Ethyliden oder
$C_6$-$C_{14}$-Arylgruppen wie beispielsweise Phenyl, 1-Naphthyl, 2-Naphthyl, 1-Anthryl, 2-Anthryl, 9-Anthryl, 1-Phenanthryl, 2-Phenanthryl, 3-Phenanthryl, 4-Phenanthryl und 9-Phenanthryl, bevorzugt Phenyl, 1-Naphthyl und 2-Naphthyl, besonders bevorzugt Phenyl.

Als beispielhafte Vertreter für substituierte Dicarbonsäuren oder deren Derivate seien genannt: 2-Methylmalonsäure, 2-Ethylmalonsäure, 2-Phenylmalonsäure, 2-Methylbernsteinsäure, 2-Ethylbernsteinsäure, 2-Phenylbernsteinsäure, 3,3-Dimethylglutarsäure, Dodecenylbernsteinsäure, Hexadecenylbernsteinsäure und Octadecenylbernsteinsäure

Die Dicarbonsäuren lassen sich entweder als solche oder in Form von Derivaten einsetzen.

Unter Derivaten werden bevorzugt verstanden die betreffenden Anhydride in monomerer oder auch polymerer Form, Mono- oder Dialkylester, bevorzugt Mono- oder Di-$C_1$-$C_4$-alkylester, besonders bevorzugt Mono- oder Dimethylester oder die entsprechenden Mono- oder Diethylester sowie gemischte Ester, bevorzugt gemischte Ester mit unterschiedlichen $C_1$-$C_4$-Alkylkomponenten, besonders bevorzugt gemischte Methylethylester.

Unter diesen sind die Anhydride und die Mono- oder Dialkylester bevorzugt, besonders bevorzugt sind die Anhydride und die Mono- oder Di-$C_1$-$C_4$-alkylester und ganz besonders bevorzugt sind die Anhydride.

$C_1$-$C_4$-Alkyl bedeutet im Rahmen dieser Schrift Methyl, Ethyl, *iso*-Propyl, n-Propyl, n-Butyl, *iso*-Butyl, *sek*-Butyl und *tert*-Butyl, bevorzugt Methyl, Ethyl und n-Butyl, besonders bevorzugt Methyl und Ethyl und ganz besonders bevorzugt Methyl.

Besonders bevorzugt setzt man Malonsäure, Bernsteinsäure, Glutarsäure, Adipinsäure, Sebacinsäure, Octadecenylbernsteinsäureanhydrid, 1,2-, 1,3- oder 1,4-Cyclohexandicarbonsäuren (Hexahydrophthalsäuren als cis- oder trans-Verbindungen oder deren Gemische), ein.

Weitere bevorzugte Dicarbonsäuren sind Glucarsäure und Weinsäure.

Die Menge an Dicarbonsäure beträgt nicht mehr als 30 mol% gegenüber der eingesetzten Menge an Zitronensäure, bevorzugt nicht mehr als 20%, ganz besonders bevorzugt nicht mehr als 15%.

**Komponente D**

Als Komponente D eignen sich Alkyl-oder Alkenylcarbonsäuren, wie zum Beispiel langkettige, lineare oder verzweigte Carbonsäuren mit 6 bis 30 C-Atomen, vorzugsweise 8 bis 22 C-Atomen, insbesondere 10 bis 18 C-Atomen im Alkyl- oder Alkenylrest, wie Octansäure, Nonansäure, Decansäure, Undecansäure, Dodecansäure, Tridecansäure, Tetradecansäure, Hexadecansäure, Arachinsäure, Behensäure, Palmitoleinsäure, Stearinsäure, Ölsäure, Linolsäure, Linolensäure, Arachidonsäure oder deren Li-, Na-, K-; Cs-, Ca. oder Ammoniumsalzen.

Es können auch Gemische eingesetzt werden.

Bevorzugt verwendet werden Ölsäure, Palmitinsäure, Linolsäure, Stearinsäure. Laurinsäure und Rizinolsäure.

Die Alkyl-oder Alkenylcarbonsäuren können auch in Form ihrer Carbonsäurealkylester eingesetzt werden. Bevorzugt werden die Methylester verwendet.

Als langkettige Alkohole eignen sich beispielsweise lineare oder verzweigte Alkohole mit 6 bis 30 C-Atomen, vorzugsweise 8 bis 22 C-Atomen, insbesondere 10 bis 18 C-Atomen im linearen oder verzweigten Alkylrest wie Octan-1-ol, Decan-1-ol, Laurylalkohol, Myristylalkohol, Cetylalkohol, Stearylalkohol, Eicosanol, Behenylalkohol, 9-Hexadecen-1-ol und 9-Octadecen-1-ol.

Bevorzugt eingesetzt werden Laurylalkohol und Stearylalkohol.

Als beispielhafte Vertreter für Alkyl-oder Alkenylaminen seien genannt:

lineare oder verzweigte Alkylamine mit 6 bis 30 C-Atomen, vorzugsweise 8 bis 22 C-Atomen, insbesondere 10 bis 18 C-Atomen im linearen oder verzweigten Alkylrest, wie Hexylamin, Octylamin, Nonylamin, Decylamin, Dodecylamin, Tetradecylamin, Hexadecylamin, Octadecylamin und deren Gemische.

Als langkettige Isocyanate kommen lineare oder verzweigte Isocyanate mit 6 bis 30 C-Atomen in Betracht, vorzugsweise 8 bis 22 C-Atomen, insbesondere 10 bis 18 C-Atomen im linearen oder verzweigten Alkylrest, wie Octylisocyanat, Dodecylisocyanat, Stearinisocyanat und deren Gemische.

Das Molverhältnis von (Komponente A + Komponente B) zu Komponente D beträgt bevorzugt 10 : 0,1 bis 0,5 : 0,1, besonders bevorzugt 5 : 0,1 bis 1 : 0,1.

Ein weiterer Gegenstand der vorliegenden Erfindung sind hydrophobierte verzweigte Polyester wie oben beschrieben und das Verfahren zu deren Herstellung.

## Verfahren zur Herstellung

Das Verfahren zur Herstellung der verzweigten Polyester auf Basis von Zitronensäure kann in Substanz oder in Gegenwart eines organischen Lösemittels durchgeführt werden. Als Lösemittel geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders Ether geeignet, wie beispielsweise Dioxan oder Tetrahydrofuran und Ketone wie beispielsweise Methylethylketon und Methylisobutylketon.

Die Menge an zugesetztem Lösemittel beträgt mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01 bis 10-fache.

Bevorzugt wird die Reaktion ohne Zusatz von Lösungsmittel durchgeführt.

Zur Durchführung des Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Å, $MgSO_4$ und $Na_2SO_4$. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen, bei dem das Wasser mit Hilfe eines Schleppmittels entfernt wird.

Bevorzugt wird das Verfahren in Abwesenheit von Katalysatoren durchgeführt. Man kann das Verfahren aber auch in Anwesenheit von mindestens einem Katalysator durchführen. Als bevorzugte Katalysatoren können saure anorganische, metallorganische oder organische Katalysatoren oder Gemische aus mehreren sauren anorganischen, metallorganischen oder organischen Katalysatoren.

Als saure Katalysatoren werden im Rahmen dieser Schrift Lewis-Säuren angesehen, also solche Verbindungen gemäß Römpps Chemie-Lexikon, Stichwort "Säure-Base-Begriff", die ein Elektronenpaar in die Valenzschale einer ihrer Atome aufnehmen können.

Als saure anorganische Katalysatoren sind beispielsweise Schwefelsäure, Sulfate und Hydrogensulfate, wie Natriumhydrogensulfat, Phosphorsäure, Phosphonsäure, hypophosphorige Säure, Aluminiumsulfathydrat, Alaun, saures Kieselgel (pH $\leq$ 6, insbesondere $\leq$ 5) und saures Aluminiumoxid zu nennen. Weiterhin sind beispielsweise Aluminiumverbindungen der allgemeinen Formel $Al(OR^1)_3$ und Titanate der allgemeinen Formel $Ti(OR^1)_4$ als saure anorganische Katalysatoren einsetzbar, wobei die Reste $R^1$ jeweils gleich oder verschieden sein können und unabhängig voneinander gewählt sind aus $C_1$-$C_{20}$-Alkylresten, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, 2-Ethylhexyl, n-Nonyl, n-Decyl, n-Dodecyl, n-Hexadecyl oder n-Octadecyl, $C_3$-$C_{12}$-Cycloalkylresten, beispielsweise Cyclopropyl, Cyclobutyl, Cyclopentyl, Cyclohexyl, Cycloheptyl, Cyclooctyl, Cyclononyl, Cyclodecyl, Cycloundecyl und Cyclododecyl; bevorzugt sind Cyclopentyl, Cyclohexyl und Cycloheptyl.

Bevorzugt sind die Reste $R^1$ in $Al(OR^1)_3$ bzw. $Ti(OR^1)_4$ jeweils gleich und gewählt aus n-Butyl, Isopropyl, 2-Ethylhexyl, n-Octyl, Decyl oder Dodecyl.

Bevorzugt wird Titan(IV)tetrabutylat eingesetzt.

Bevorzugte saure metallorganische Katalysatoren sind beispielsweise gewählt aus Dialkylzinnoxiden $(R^1)_2SnO$ oder Dialkylzinndiestern $(R^1)_2Sn(OR^2)_2$ wobei $R^1$ wie oben stehend definiert ist und gleich oder verschieden sein kann.

$R^2$ kann die gleichen Bedeutungen haben wie $R^1$ und zusätzlich $C_6$-$C_{12}$-Aryl sein, beispielsweise Phenyl, o-, m- oder p-Tolyl, Xylyl oder Naphthyl. $R^2$ kann jeweils gleich oder verschieden sein.

Beispiele sind für zinnorganische Katalysatoren sind Zinn(II)-n-octanoat, Zinn-(II)-2-ethylhexanoat, Zinn-(II)-laurat, Dibutylzinnoxid, Diphenylzinnoxid, Dibutylzinndichlorid, Dibutylzinndiacetat, Dibutylzinndilaurat, Dibutylzinndimaleat oder Dioctylzinndiacetat. Denkbar sind auch antimon-, wismut-. oder aluminiumorganische Katalysatoren.

Besonders bevorzugte Vertreter für saure metallorganische Katalysatoren sind Dibutylzinnoxid, Diphenylzinnoxid und Dibutylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form, zum Beispiel an Kieselgel oder an Zeolithen, einzusetzen.

Wünscht man saure anorganische, metallorganische oder organische Katalysatoren einzusetzen, so setzt man bevorzugt 1 bis 10000 Gew.ppm Katalysator, besonders bevorzugt 2 bis 5000 Gew.ppm bezogen auf die Gesamtmasse der hydroxy- und der carboxygruppenhaltigen Verbindungen.

Wünscht man saure anorganische, metallorganische oder organische Katalysatoren einzusetzen, so wird das Verfahren bei Temperaturen von 60 bis 140°C durchgeführt. Vorzugsweise arbeitet man bei Temperaturen von 80 bis 140, besonders bevorzugt bei 100 bis 130°C.

Es ist auch möglich, als Katalysatoren Enzyme einzusetzen, wenn deren Einsatz auch weniger bevorzugt ist.

Dafür einsetzbare Enzyme sind beispielsweise ausgewählt unter Hydrolasen (E.C. 3.-.-.-), und unter diesen besonders unter den Esterasen (E.C. 3.1.-.-), Lipasen (E.C. 3.1.1.3), Glykosylasen (E.C. 3.2.-.-) und Proteasen (E.C. 3.4.-.-) in freier oder auf einem Träger chemisch oder physikalisch immobilisierter Form, bevorzugt Lipasen, Esterasen oder Proteasen und besonders bevorzugt Esterasen (E.C. 3.1.-.-). Ganz besonders bevorzugt sind Novozyme 435 (Lipase aus *Candida antarctica* B) oder Lipase aus Alcaligenes sp., Aspergillus sp., Mucor sp., Penicilium sp., Geotricum sp., Rhizopus sp., Burkholderia sp., Candida sp., Pseudomonas sp., Thermomyces sp. oder Schweinepankreas, insbesondere bevorzugt sind Lipase aus *Candida antarctica* B oder aus Burkholderia sp.

Der Enzymgehalt im Reaktionsmedium liegt in der Regel im Bereich von etwa 0,1 bis 10 Gew.-%, bezogen auf die Summe der eingesetzten Komponenten

Wünscht man als Katalysatoren Enzyme einzusetzen, so wird das Verfahren bei Temperaturen von 20 und bis 120 °C, bevorzugt 20 bis 100 °C und besonders bevorzugt nicht mehr als 20 - 80 °C durchgeführt.

Das Verfahren wird vorzugsweise unter Inertgasatmosphäre, d.h. einem unter den Reaktionsbedingungen inerten Gas, durchgeführt, beispielsweise unter Kohlendioxid, Verbrennungsgasen, Stickstoff oder Edelgasen, unter denen insbesondere Argon zu nennen ist.

Das Verfahren wird bei Temperaturen von 60 bis 140°C durchgeführt. Vorzugsweise arbeitet man bei Temperaturen von 80 bis 140, besonders bevorzugt bei 100 bis 130°C.

Die Druckbedingungen des Verfahrens sind in der Regel unkritisch. Man kann bei deutlich verringertem Druck arbeiten, beispielsweise bei 10 bis

500 mbar. Das Verfahren kann auch bei Drucken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drucken bis 10 bar. Bevorzugt ist die Umsetzung bei verringertem oder Atmosphärendruck, besonders bevorzugt bei Atmosphärendruck.

Die Umsetzungsdauer des Verfahrens beträgt üblicherweise 10 Minuten bis 5 Tage, bevorzugt 30 Minuten bis 48 Stunden und besonders bevorzugt 1 bis 12 Stunden.

Nach beendeter Reaktion lassen sich die hochfunktionellen verzweigten Polyester leicht isolieren, beispielsweise durch Abfiltrieren des Katalysators und gegebenenfalls Abziehen des Lösemittels, wobei man das Abziehen des Lösemittels üblicherweise bei vermindertem Druck durchführt. Weitere gut geeignete Aufarbeitungsmethoden sind Ausfällen des Polymeren nach Zugabe von Wasser und anschließendes Waschen und Trocknen.

Falls erforderlich kann das Reaktionsgemisch einer Entfärbung, beispielsweise durch Behandlung mit Aktivkohle oder Metalloxiden, wie z.B. Aluminiumoxid, Siliciumoxid, Magnesiumoxid, Zirkonoxid, Boroxid oder Gemischen davon, in Mengen von beispielsweise 0,1 - 50 Gew%, bevorzugt 0,5 bis 25 Gew%, besonders bevorzugt 1 - 10 Gew% bei Temperaturen von beispielsweise 10 bis 140°C, bevorzugt 20 bis 130 °C und besonders bevorzugt 30 bis 120 °C unterworfen werden.

Dies kann durch Zugabe des pulver- oder granulatförmigen Entfärbungsmittels zum Reaktionsgemisch und nachfolgender Filtration oder durch Überleiten des Reaktionsgemisches über eine Schüttung des Entfärbungsmittels in Form beliebiger, geeigneter Formkörper erfolgen.

Die Entfärbung des Reaktionsgemisches kann an beliebiger Stelle des Aufarbeitungsverfahrens erfolgen, beispielsweise auf der Stufe des rohen Reaktionsgemisches oder nach gegebenenfalls erfolgter Vorwäsche, Neutralisation, Wäsche oder Lösungsmittelentfernung.

Das Reaktionsgemisch kann weiterhin einer Vorwäsche und/oder einer Neutralisation und/oder einer Nachwäsche unterworfen werden, bevorzugt lediglich einer Neutralisation. Gegebenenfalls können Neutralisation und Vorwäsche in der Reihenfolge auch vertauscht werden.

Aus der wässrigen Phase der Wäschen und/oder Neutralisation können enthaltene Wertprodukte durch Ansäuern und Extraktion mit einem Lösungsmittel zumindest teilweise wiedergewonnen und von Neuem eingesetzt werden.

Verfahrenstechnisch können für eine Wäsche oder Neutralisation im Verfahren alle an sich bekannten Extraktions- und Waschverfahren und -apparate eingesetzt werden, z.B. solche, die in Ullmann's Encyclopedia of Industrial Chemistry, 6th ed, 1999 Electronic Release, Kapitel: Liquid - Liquid Extraction -Apparatus, beschrieben sind. Beispielsweise können dies ein- oder mehrstufige, bevorzugt einstufige Extraktionen, sowie solche in Gleich- oder Gegenstromfahrweise, bevorzugt Gegenstromfahrweise sein.

In einer bevorzugten Ausführung kann jedoch auf eine Wäsche, Neutralisierung und Entfärbung verzichtet werden.

Die verzweigten Polyester weisen Molekulargewichte $M_n$ von 400 bis 5000 g/mol, bevorzugt 400 bis 3000 g/mol, besonders bevorzugt von 500 bis 2500 g/mol und Molekulargewichte $M_w$ von 500 bis 50000 g/mol, bevorzugt 700 bis 25000 g/mol, besonders bevorzugt 700 bis 15000 auf.

Die Molekulargewichte der verzweigten Polyester wurden durch Gelpermeationschromatographie (GPC) bestimmt (Eluent: THF; Standard: PMMA, Detektor: Brechungsindexdetektor) bestimmt.

Die verzweigten Polyester weisen Säurezahlen von 60 bis 600 mg KOH/ g Polymer, vorzugsweise 80 bis 500 mg KOH/g Polymer und ganz besonders bevorzugt 100 bis 450 mg KOH/g Polymer auf. Die Säurezahlen wurde gemäß DIN 53402 bestimmt.

Die verzweigten Polyester weisen Glasübergangstemperaturen im Bereich von -50 bis +50 °C, bevorzugt -40 bis +40 °C und ganz besonders bevorzugt --30 bis +40 °C auf. Die Bestimmung der Glasübergangstemperatur erfolgt mittels DSC (Differential Scanning Calorimetry) bei einer Heizrate von 20 K/min.

## Reinigerformulierungen

Eine weitere Ausführungsform der Erfindung ist durch Gemische der erfindungsgemäßen verzweigten Polyester gegeben. Solche Gemische enthalten neben den verzweigten Polyestern der Erfindung weitere Bestandteile wie Lösungsmittel oder Tenside.

Bei diesen Gemischen handelt es sich bevorzugt um Reinigungs-, Spül- oder Waschmittel oder Gemische zur Wasserbehandlung. Die verzweigten Polyester der Erfindung können nach dem Fachmann bekannten Verfahren direkt in die Formulierungen (Gemische) in ihren verschiedenen Darreichungsformen eingearbeitet werden. Hierbei sind feste Formulierungen wie Pulver, Tabletten und flüssige Formulierungen zu nennen.

Ein weiterer Gegenstand der Erfindung ist daher die Verwendung der erfindungsgemäßen verzweigten Polyester oder deren Gemische in Spül-, Reinigungs- oder Waschmitteln, insbesondere in Geschirrspülmitteln.

Besonders vorteilhaft können sie in maschinellen Geschirrspülmitteln eingesetzt werden. Sie zeichnen sich dabei vor allem durch ihre belagsinhibierende Wirkung sowohl gegenüber anorganischen als auch organischen Belägen aus. Insbesondere inhibieren sie Beläge aus Calcium- und Magnesiumcarbonat und Calcium- und Magnesiumphosphaten und -phosphonaten. Zusätzlich verhindern sie Ablagerungen, die aus den Schmutzbestandteilen der Spülflotte stammen, wie Fett-, Eiweiß- und Stärkebeläge.

Die erfindungsgemäßen maschinellen Reinigungsformulierungen können in flüssiger oder fester Form, ein- oder mehrphasig, als Tabletten oder in Form anderer Dosiereinheiten, verpackt oder unverpackt bereitgestellt werden.

Die verzweigten Polyester können sowohl in mehrkomponentigen Produktsystemen (getrennter Einsatz von Reiniger, Klarspüler und Regeneriersalz) als auch in solchen Geschirrspülmitteln eingesetzt werden, in denen die Funktionen von Reiniger, Klarspülmittel und Regeneriersalz in einem Produkt vereinigt sind (3-in-1-Produkte, 6-in-1-Produkte, 9-in-1-Produkte, all-in-one Produkte).

Eine bevorzugte Ausführungsform der erfindungsgemäßen Gemische ist gegeben durch eine Reinigungsformulierung für die maschinelle Geschirrreinigung enthaltend als Komponenten:

a) 1 bis 20 Gew.-% mindestens eines erfindungsgemäßen Polymers

b) 0 bis 50 Gew.-% Komplexbildner,

c) 0 bis 70 Gew.-% Phosphate,

d) 0 bis 60 Gew.-% weitere Builder und Cobuilder,

e) 0,1 bis 20 Gew.-% nichtionische Tenside,

f) 0,1 bis 30 Gew.-% Bleichmittel und gegebenenfalls Bleichaktivatoren,

g) 0 bis 8 Gew.-% Enzyme,

h) 0 bis 50 Gew.-% ein oder mehrere weitere Zusatzstoffe wie anionische oder zwitterionische Tenside, Bleichkatalysatoren, Alkaliträger, polymere Dispergiermittel, Korrosionsinhibitoren, Entschäumer, Farbstoffe, Duftstoffe, Füll-

stoffe, Tablettensprengmittel, organische Lösungsmittel, Tablettierhilllfsmittel, Disintegrationsmittel, Verdicker, Löslichkeitsvermittler und Wasser,

wobei die Summe der Komponenten a) bis h) 100 Gew.-% ergibt.

Als Komponente b) können die erfindungsgemäßen Reinigungsformulierungen einen oder mehrere Komplexbildner enthalten. Bevorzugte Komplexbildner sind ausgewählt aus der Gruppe bestehend aus Nitrilotriessigsäure, Ethylendiamintetraessigsäure, Diethylentriaminpentaessigsäure, Hydroxyethylethylendiamintriessigsäure und Methylglycindiessigsäure, Glutaminsäurediessigsäure, Iminodibernsteinsäure, Hydroxyiminodibernsteinsäure, Ethylendiamindibernsteinsäure, Asparaginsäurediessigsäure sowie deren Salzen. Besonders bevorzugte Komplexbildner b) sind Methylglycindiessigsäure und deren Salze.

Als Komponente c) kann das erfindungsgemäße Reinigungsmittel Phosphate enthalten. Enthält das Reinigungsmittel Phosphate, enthält es diese im Allgemeinen in Mengen von 1 bis 70 Gew.-%, bevorzugt von 5 bis 60 Gew.-%, besonders bevorzugt von 20 bis 55 Gew.-%.

Unter der Vielzahl der kommerziell erhältlichen Phosphate haben die Alkalimetallphosphate unter besonderer Bevorzugung von Pentanatrium- bzw. Pentakaliumtriphosphat (Natrium- bzw. Kaliumtripolyphosphat) in der Wasch- und Reinigungsmittel-Industrie die größte Bedeutung.

Als Phosphate für Geschirrreinigungsmittel geeignet sind insbesondere Alkalimetallphosphate und polymere Alkalimetallphosphate, die in Form ihrer alkalischen, neutralen oder sauren Natrium- oder Kaliumsalze zugegen sein können. Beispiele derartiger Phosphate sind Trinatriumphosphat, Tetranatriumdiphosphat, Dinatriumdihydrogendiphosphat, Pentanatriumtripolyphosphat, sogenanntes Natriumhexametaphosphat, oligomeres Trinatriumphosphat mit einem Oligomerisierungsgrad von 5 bis 1000, bevorzugt 5 bis 50, und die entsprechenden Kaliumsalze, oder Gemische von Natriumhexametaphosphat und den entsprechenden Kaliumsalzen, oder Gemische der Natrium- und Kaliumsalze. Insbesondere bevorzugt sind Tripolyphosphatsalze. Diese werden in Mengen von 30 bis 65 Gew.-%, bevorzugt 35 bis 60 Gew.-%, ausgedrückt als wasserfreie Aktivsubstanz und bezogen auf die gesamte Reinigungsformulierung, eingesetzt.

Als Komponente d) kann das erfindungsgemäße Reinigungsmittel Builder und Cobuilder enthalten. Builder und Cobuilder sind wasserlösliche oder wasserunlösliche Substanzen, deren Hauptaufgabe im Binden von Calcium- und Magnesiumionen besteht.

Dies können niedermolekulare Carbonsäuren sowie deren Salze wie Alkalicitrate, insbesondere wasserfreies Trinatriumcitrat oder Trinatriumcitratdihydrat, Alkalisuccinate, Alkalimalonate, Fettsäuresulfonate, Oxydisuccinat, Alkyl- oder Alkenyldisuccinate, Gluconsäuren, Oxadiacetate, Carboxymethyloxysuccinate, Tartratmonosuccinat, Tartratdisuccinat, Tartratmonoacetat, Tartratdiacetat und $\alpha$-Hydroxypropionsäure sein.

Eine weitere Substanzklasse mit Cobuildereigenschaften, welche in den erfindungsgemäßen Reinigungsmitteln enthalten sein können, stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z.B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Eine weitere Substanzklasse im Buildersystem sind die Silikate. Enthalten sein können kristalline schichtförmige Silikate mit der allgemeinen Formel $NaMSi_xO_{2x+1} \cdot yH_2O$, wobei M Natrium oder Wasserstoff bedeutet, x eine Zahl von 1,9 bis 22, vorzugsweise von 1,9 bis 4, wobei besonders bevorzugte Werte für x 2, 3 oder 4 sind und y eine Zahl von 0 bis 33, vorzugsweise 0 bis 20 ist. Daneben können amorphe Natriumsilikate mit einem $SiO_2 : Na_2O$-Verhältnis von 1 bis 3,5, vorzugsweise von 1,6 bis 3 und insbesondere von 2 bis 2,8 zum Einsatz kommen.

Weiterhin werden Carbonate und Hydrogencarbonate eingesetzt, von denen die Alkalisalze, insbesondere Natriumsalze bevorzugt werden. Bevorzugte Mengen sind 5 bis 50 Gew.-%, besonders bevorzugt 10 bis 40 Gew.-% und insbesondere 15 bis 30 Gew.-%.

Als Komponente e) enthalten die erfindungsgemäßen Reinigungsformulierungen schwach oder niedrig schäumende nichtionische Tenside. Diese sind im Allgemeinen in Anteilen von 0,1 bis 20 Gew.-%, bevorzugt von 0,1 bis 15 Gew.-%, besonders bevorzugt von 0,25 bis 10 Gew.-% enthalten.

Geeignete nichtionische Tenside umfassen die Tenside der allgemeinen Formel (III)

$$R^{18}\text{-}O\text{-}(CH_2CH_2O)_p\text{-}(CHR^{17}CH_2O)_m\text{-}R^{19} \qquad (III)$$

worin $R^{18}$ ein linearer oder verzweigter Alkylrest mit 8 bis 22 C-Atomen ist,

$R^{17}$ und $R^{19}$ unabhängig voneinander Wasserstoff oder ein linearer oder verzweigter Alkylrest mit 1-10 C-Atomen oder H sind, wobei $R^{17}$ bevorzugt Methyl ist,

p und m unabhängig voneinander 0 bis 300 sind. Bevorzugt ist p = 1 - 100 und m = 0 - 30.

Die Tenside der Formel (III) können sowohl statistische Copolymere als auch Block-Copolymere sein, bevorzugt sind sie Block-Copolymere.

Weiterhin können Di- und Multiblockcopolymerisate, aufgebaut aus Ethylenoxid und Propylenoxid, eingesetzt werden, die beispielsweise unter der Bezeichnung Pluronic® (BASF SE) oder Tetronic® (BASF Corporation) kommerziell erhältlich sind. Weiterhin können Umsetzungsprodukte aus Sorbitanestern mit Ethylenoxid und/oder Propylenoxid verwendet werden. Ebenfalls eignen sich Aminoxide oder Alkylglycoside. Eine Übersicht geeigneter nichtionischer Tenside gibt die EP-A 851 023 sowie die DE-A 198 19 187.

Es können auch Gemische mehrerer verschiedener nichtionischer Tenside enthalten sein.

Die Formulierungen können weiterhin anionische oder zwitterionische Tenside enthalten, bevorzugt in Abmischung mit nichtionischen Tensiden. Geeignete anionische und zwitterionischer Tenside sind ebenfalls in EP-A 851 023 sowie DE-A 198 19 187 genannt.

Als Komponente f) können die erfindungsgemäßen Reinigungsformulierungen Bleichmittel und gegebenenfalls Bleichaktivatoren enthalten.

Bleichmittel unterteilen sich in Sauerstoffbleichmittel und chlorhaltige Bleichmittel. Verwendung als Sauerstoffbleichmittel finden Alkalimetallperborate und deren Hydrate sowie Alkalimetallpercarbonate. Bevorzugte Bleichmittel sind hierbei Natriumperborat in Form des Mono- oder Tetrahydrats, Natriumpercarbonat oder die Hydrate von Natriumpercarbonat.

Ebenfalls als Sauerstoffbleichmittel einsetzbar sind Persulfate und Wasserstoffperoxid.

Typische Sauerstoffbleichmittel sind auch organische Persäuren wie beispielsweise Perbenzoesäure, Peroxy-alpha-Naphthoesäure, Peroxylaurinsäure, Peroxystearinsäure, Phthalimidoperoxycapronsäure, 1,12-Diperoxydodecandisäure, 1,9-Diperoxyazelainsäure, Diperoxoisophthalsäure oder 2-Decyldiperoxybutan-1,4-disäure.

Außerdem können auch folgende Sauerstoffbleichmittel in der Reinigerformulierung Verwendung finden:

Kationische Peroxysäuren, die in den Patentanmeldungen US 5,422,028, US 5,294,362 sowie US 5,292,447 beschrieben sind, und Sulfonylperoxysäuren, die in der Patentanmeldung US 5,039,447 beschrieben sind.

Sauerstoffbleichmittel werden in Mengen von im Allgemeinen 0,5 bis 30 Gew.-%, bevorzugt von 1 bis 20 Gew.-%, besonders bevorzugt von 3 bis 15 Gew.-%, bezogen auf die gesamte Reinigerformulierung, eingesetzt.

Chlorhaltige Bleichmittel sowie die Kombination von chlorhaltigen Bleichmittel mit peroxidhaltigen Bleichmitteln können ebenfalls verwendet werden. Bekannte chlorhaltige Bleichmittel sind beispielsweise 1,3-Dichloro-5,5-dimethylhydantoin, N-Chlorosulfamid, Chloramin T, Dichloramin T, Chloramin B, N,N'-Dichlorbenzoylharnstoff, p-Toluolsulfondichloroamid oder Trichlorethylamin. Bevorzugte chlorhaltige Bleichmittel sind Natriumhypochlorit, Calciumhypochlorit, Kaliumhypochlorit, Magnesiumhypochlorit, Kaliumdichloroisocyanurat oder Natriumdichloroisocyanurat.

Chlorhaltige Bleichmittel werden in Mengen von im Allgemeinen 0,1 bis 20 Gew.-%, bevorzugt von 0,2 bis 10 Gew.-%, besonders bevorzugt von 0,3 bis 8 Gew.-%, bezogen auf die gesamte Reinigerformulierung, eingesetzt.

Weiterhin können in geringen Mengen Bleichmittelstabilisatoren wie beispielsweise Phosphonate, Borate, Metaborate, Metasilikate oder Magnesiumsalze zugegeben werden.

Bleichaktivatoren sind Verbindungen, die unter Perhydrolysebedingungen aliphatische Peroxocarbonsäuren mit vorzugsweise 1 bis 10 Kohlenstoffatomen, insbesondere 2 bis 4 Kohlenstoffatomen, und/oder substituierte Perbenzoesäure ergeben. Geeignet sind Verbindungen, die eine oder mehrere N- bzw. O-Acylgruppen und/oder gegebenenfalls substituierte Benzoylgruppen enthalten, beispielsweise Substanzen aus der Klasse der Anhydride, Ester, Imide, acylierten Imidazole oder Oxime. Beispiele sind Tetraacetylethylendiamin (TAED), Tetraacetylmethylendiamin (TAMD), Tetraacetylglykoluril (TAGU), Tetraacetylhexylendiamin (TAHD), N-Acylimide, wie beispielsweise N-Nonanoylsuccinimid (NOSI), acylierte Phenolsulfonate, wie beispielsweise n-Nonanoyl- oder Isononanoyloxybenzolsulfonate (n- bzw. iso-NOBS), Pentaacetylglucose (PAG), 1,5-Diacetyl-2,2-dioxohexahydro-1,3,5-triazin (DADHT) oder Isatosäureanhydrid (ISA). Ebenfalls als Bleichaktivatoren eignen sich Nitrilquats wie beispielsweise N-Methyl-Morpholinium-Acetonitril-Salze (MMA-Salze) oder Trimethylammoniumacetonitril-Salze (TMAQ-Salze).

Bevorzugt eignen sich Bleichaktivatoren aus der Gruppe bestehend aus mehrfach acylierten Alkylendiaminen, besonders bevorzugt TAED, N-Acylimide, besonders bevorzugt NOSI, acylierte Phenolsulfonate, besonders bevorzugt n- oder iso-NOBS, MMA und TMAQ.

Bleichaktivatoren werden in Mengen von im Allgemeinen 0,1 bis 10 Gew.-%, bevorzugt von 1 bis 9 Gew.-%, besonders bevorzugt von 1,5 bis 8 Gew.-%, bezogen auf die gesamte Reinigerformulierung eingesetzt.

Zusätzlich zu den konventionellen Bleichaktivatoren oder an deren Stelle können auch sogenannte Bleichkatalysatoren in die Klarspülerpartikel eingearbeitet werden. Bei diesen Stoffen handelt es sich um bleichverstärkende Übergangsmetallsalze bzw. Übergangsmetallkomplexe wie beispielsweise Mangan-, Eisen-, Cobalt-, Ruthenium- oder Molybdän-Salenkomplexe oder carbonylkomplexe. Auch Mangan-, Eisen-, Co balt-, Ruthenium-, Molybdän-, Titan-, Vanadium- und Kupfer-Ksmplexe mit stickstoffhaltigen Tripod-Liganden sowie Cobalt-, Eisen-, Kupfer- und Ruthenium-Aminkomplexe sind als Bleichkatalysatoren verwendbar.

Als Komponente g) können die erfindungsgemäßen Reinigungsformulierungen Enzyme enthalten. Dem Reinigungsmittel können zwischen 0 und 8 Gew.-% Enzyme, bezogen auf die gesamte Zubereitung, zugesetzt werden, um die Leistung der Reinigungsmittel zu steigern oder unter milderen Bedingungen die Reinigungsleistung in gleicher Qualität zu gewährleisten. Zu den am häufigsten verwendeten Enzymen gehören Lipasen, Amylasen, Cellulasen und Proteasen. Weiterhin können beispielsweise auch Esterasen, Pectinasen, Lactasen und Peroxidasen eingesetzt werden.

Die erfindungsgemäßen Reinigungsmittel können darüber hinaus als Komponente i) weitere Additive enthalten wie anionische oder zwitterionische Tenside, Bleichkatalysatoren, Alkaliträger, Korrosionsinhibitoren, Entschäumer, Farbstoffe, Duftstoffe, Füllstoffe, Tablettensprengmittel, organische Lösungsmittel und Wasser.

Desweiteren können die erfindungsgemäßen Reinigungsmittel 0 bis 50 Gew.-% ein oder mehrere weitere Zusatzstoffe wie Alkaliträger, Korrosionsinhibitoren, Entschäumer, Farbstoffe, Duftstoffe, Füllstoffe, organische Lösungsmittel, Tablettierhilfsmittel, Disintegrationsmittel, Löslichkeitsvermittler und Wasser enthalten.

Als weitere Bestandteile der Reinigerformulierung können Alkaliträger zugegen sein. Neben den bereits bei den Buildersubstanzen genannten Ammonium- oder Alkalimetallcarbonate, Ammonium- oder Alkalimetallhydrogencarbonate und Ammonium- oder Alkalimetallsesquicarbonate können als Alkaliträger auch Ammonium- oder Alkalimetallhydroxide, Ammonium- oder Alkalisilikate und Ammonium- oder Alkalimetasilikate sowie Gemische der vorgenannten Stoffe eingesetzt werden.

Als Korrosionsinhibitoren können Silberschutzmittel aus der Gruppe der Triazole, der Benzotriazole, der Bisbenzotriazole, der Aminotriazole, der Alkylaminotriazole und der Übergangsmetallsalze oder- komplexe eingesetzt werden.

Zur Verhinderung von Glaskorrosion, das sich durch Trübungen, Irisieren, Schlieren und Linien auf den Gläsern bemerkbar macht, werden Glaskorrosionsinhibitoren eingesetzt. Bevorzugte Glaskorrosionsinhibitoren sind aus der Gruppe der Magnesium-Zink und Bismuth-Salze und Komplexe.

Paraffinöle und Silikonöle können optional als Entschäumer und zum Schutz von Kunststoff- und Metalloberflächen eingesetzt werden. Entschäumer werden generell in Anteilen von 0,001 Gew.-% bis 5 Gew.-% eingesetzt. Außerdem können Farbstoffe wie beispielsweise Patentblau, Konservierungsmittel wie beispielsweise Kathon CG, Parfüme und sonstige Duftstoffe der erfindungsgemäßen Reinigungsformulierung zugesetzt werden.

Ein geeigneter Füllstoff ist beispielsweise Natriumsulfat.

Ein weiterer Gegenstand der Erfindung ist die Verwendung der erfindungsgemäßen verzweigten Polyester und deren Gemische als Belagsinhibitoren in wasserführenden Sytemen.

Wasserführende Systeme, in denen die erfindungsgemäßen Polymere verwendet werden können, sind Prozesse für die Wasserbehandlung, insbesondere Meerwasser- und Brackwasser-Entsalzungsanlagen, Kühlwassersysteme und Kesselspeisewassersysteme und industrielle Prozesswässer. Die Entsalzungsanlagen können thermischer Natur sein oder auf Membranverfahren wie Umkehrosmose oder Elektrodialyse beruhen.

Im Allgemeinen werden die erfindungsgemäßen Polymere den wasserführenden Systemen in Mengen von 0,1 mg/l bis 100 mg/l zugegeben. Die optimale Dosierung richtet sich nach den Erfordernissen der jeweiligen Anwendung bzw. nach den Betriebsbedingungen des jeweiligen Verfahrens. So werden bei der thermischen Meerwasserentsalzung die Polymere bevorzugt in Konzentrationen von 0,5 mg/l bis 10 mg/l eingesetzt. In industriellen Kühlkreisläufen oder Kesselspeisewassersystemen finden Polymerkonzentrationen bis zu 100 mg/l Anwendung. Häufig werden Wasseranalysen durchgeführt, um den Anteil belagsbildender Salze und somit die optimale Dosierung zu ermitteln.

Den wasserführenden Systemen können auch Formulierungen zugegeben werden, die neben den erfindungsgemäßen Polymeren je nach Anforderung u.a. Phosphonate, Polyphosphate, Zinksalze, Molybdatsalze, organische Korrosionsinhibitoren wie Benzotriazol, Tolyltriazol, Benzimidazol oder Ethinylcarbinolalkoxylate, Biozide, Komplexbildner und/oder Tenside enthalten können. Beispiele für Phosponate sind 1-Hydroxyethan-1.1-diphosphonsäure (HEDP), 2-Phosphonobutan-1,2,4-tricarbonsäure (PBTC), Aminotrimethylenphosphonsäure (ATMP) Diethylentriaminpenta(methylenphosphonsäure) (DTPMP) und Ethylendiamintetra(methylenphophonsäure) (EDTMP), die jeweils in Säureform oder in Form ihrer Natriumsalze verwendet werden,

Die vorliegende Erfindung stellt verzweigte Polyester zur Verfügung, die sich für Reinigungszwecke und zum Zwecke der Wasserbehandlung einsetzen lassen und dennoch biologisch abbaubar sind. Diese polymeren Effektstoffe, die eine geringe Toxizität aufweisen, sind mittels eines technisch relativ einfachen und preiswerten Verfahrens herstellbar und lassen sich leicht in Formulierungen für Reinigungszwecke in ihren verschiedenen Darreichungsformen einarbeiten.

Die Erfindung wird durch die Beispiele näher erläutert ohne dass die Beispiele den Gegenstand der Erfindung einschränken.

**Beispiele**

Herstellung der erfindungsgemäßen Polyester

Allgemeine Anmerkungen:

Die Molekulargewichte wurden durch Gelpermeationschromatographie (GPC) bestimmt (Eluent: THF; Standard: PMMA; Detektor: Brechungsindexdetektor).
Die Säurezahlen (mg KOH/g Polymer) wurden gemäß DIN 53402 bestimmt.

Unter TMP wird Trimethylolpropan verstanden.

Unter TMP x n EO wird mit n mol Ethylenoxid alkoxyliertes Trimethylolpropan verstanden, wobei n ein Mittelwert (Zahlenmittel) sein kann.

Unter PEG 200 wird ein Polyethylenglykol mit einem mittleren Molekulargewicht von 200 g/mol verstanden.
Unter Polyglycerin 3 wird Triglycerin verstanden.

Polymer 1: Polykondensat aus Zitronensäuremonohydrat/TMP 1,5:1,0

In einen 500 ml-Rundkolben, ausgestattet mit Rührer, Innenthermometer, Gaseinleitungsrohr und absteigendem Kühler mit Auffanggefäß wurden 210,4 g (1,00 mol) Zitronensäuremonohydrat und 89,6 g (0,67mol) TMP, sowie 0,1 g (400 ppm) Titan(IV)tetrabutylat vorgelegt. Unter Stickstoffbegasung wurde die Mischung auf 130 °C erhitzt und unter Rühren für 2 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelben wasserlöslichen Harzes erhalten.
Folgende Kennzahlen wurden bestimmt:

Säurezahl = 345 mg KOH/g Polymer
$M_n$ = 570 g/mol, $M_w$ = 2580 g/mol

Polymer 2: Polykondensat aus Zitronensäuremonohydrat/TMP 2,0:1,0

In einen 500 ml-Rundkolben, ausgestattet mit Rührer, Innenthermometer, Gaseinleitungsrohr und absteigendem Kühler mit Auffanggefäß wurden 151,6 g (0,77 mol) Zitronensäuremonohydrat und 48,8 g (0,37 mol) TMP, sowie 0,06 g (300 ppm) Titan(IV)tetrabutylat vorgelegt. Unter Stickstoffbegasung wurde die Mischung auf 130 °C erhitzt und unter Rühren für 2 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelben wasserlöslichen Harzes erhalten.
Folgende Kennzahlen wurden bestimmt:

Säurezahl = 398 mg KOH/g Polymer
$M_n$ = 550 g/mol, $M_w$ = 3990 g/mol

Polymer 3: Polykondensat aus Zitronensäuremonohydrat/TMP /TMPx12,2 EO 1,7:0,5:0,5

In einen 500 ml-Rundkolben, ausgestattet mit Rührer, Innenthermometer, Gaseinleitungsrohr und absteigendem Kühler mit Auffanggefäß wurden 141,1 g (0,67 mol) Zitronensäuremonohydrat, 132,4 g (0,20 mol) TMP x 12 EO und 26,5 g (0,20 mol) TMP, sowie 0,1 g (400 ppm) Titan(IV)tetrabutylat vorgelegt. Unter Stickstoffbegasung wurde die Mischung auf 130 °C erhitzt und unter Rühren für 2,5 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelben wasserlöslichen Harzes erhalten.
Folgende Kennzahlen wurden bestimmt:

Säurezahl = 262 mg KOH/g Polymer
$M_n$ = 1170 g/mol, $M_w$ = 2260 g/mol

Polymer 4: Polykondensat aus Zitronensäuremonohydrat/Polyglycerin 3 - 3,0:1,0

In einen 500 ml-Rundkolben, ausgestattet mit Rührer, Innenthermometer, Gaseinleitungsrohr und absteigendem Kühler mit Auffanggefäß wurden 217,4 g (1,03 mol) Zitronensäuremonohydrat und 82,4 g (0,34 mol) Polyglycerin 3, sowie 0,015 g (50 ppm) Schwefelsäure vorgelegt. Unter Stickstoffbegasung wurde die Mischung auf 130 °C erhitzt und unter Rühren für 4 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelben wasserlöslichen Harzes erhalten.

Folgende Kennzahlen wurden bestimmt:

Säurezahl = 428 mg KOH/g Polymer
$M_n$ = 1320 g/mol, $M_w$ = 1600 g/mol

Polymer 5: Polykondensat aus Zitronensäuremonohydrat/Polyglycerin 3/TMP 4,0:1,0:1,0

In einen 500 ml-Rundkolben, ausgestattet mit Rührer, Innenthermometer, Gaseinleitungsrohr und absteigendem Kühler mit Auffanggefäß wurden 207,5 g (1,00 mol) Zitronensäuremonohydrat, 59,3 g (0,25 mol) Polyglycerin 3 und 33,1 (0,25 mol) TMP, sowie 0,1 g (400 ppm) Titan(IV)tetrabutylat vorgelegt. Unter Stickstoffbegasung wurde die Mischung auf 130 °C erhitzt und unter Rühren für 3,5 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelben wasserlöslichen Harzes erhalten.
Folgende Kennzahlen wurden bestimmt:

Säurezahl = 378 mg KOH/g Polymer
$M_n$ = 520 g/mol, $M_w$ = 700 g/mol

Polymer 6: Polykondensat aus Zitronensäuremonohydrat/Diethylenglycol/TMP 1,7:0,5:0,5 (Ohne Kat.)

In einen 500 ml-Rundkolben, ausgestattet mit Rührer, Innenthermometer, Gaseinleitungsrohr und absteigendem Kühler mit Auffanggefäß wurden 224,5 g (1,07 mol) Zitronensäuremonohydrat, 33,3 g (0,31 mol) Diethylenglykol und 42,2 g (0,31 mol) TMP, vorgelegt. Unter Stickstoffbegasung wurde die Mischung auf 130 °C erhitzt und unter Rühren für 2,0 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines dunkelgelben wasserlöslichen Harzes erhalten. Folgende Kennzahlen wurden bestimmt:

Säurezahl = 412 mg KOH/g Polymer
$M_n$ = 1300 g/mol, $M_w$ = 3500 g/mol

Polymer 7: Polykondensat aus Zitronensäuremonohydrat/TMP/PEG 200 1,7:0,5:0,5 (Ohne Kat.)

In einen 1000 ml-Rundkolben, ausgestattet mit Rührer, Innenthermometer, Gaseinleitungsrohr und absteigendem Kühler mit Auffanggefäß wurden 204,4 g (0,97 mol) Zitronensäuremonohydrat, 57,2 g (0,29 mol) PEG 200 und 38,4 g (0,29 mol) TMP vorgelegt. Unter Stickstoffbegasung wurde die Mischung auf 130 °C erhitzt und unter Rühren für 8 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet.
Das Produkt wurde in Form eines gelben wasserlöslichen Harzes erhalten.
Folgende Kennzahlen wurden bestimmt:

Säurezahl = 347 mg KOH/g Polymer
$M_n$ = 890 g/mol, $M_w$ = 2700 g/mol

Polymer 8: Polykondensat aus Zitronensäuremonohydrat/TMP/Ölsäure 1,5:1,0:0,2 (Ohne Kat.)

In einen 1000 ml-Rundkolben, ausgestattet mit Rührer, Innenthermometer, Gaseinleitungsrohr und absteigendem Kühler mit Auffanggefäß wurden 186,9 g (0,88 mol) Zitronensäuremonohydrat, 79,6 g (0,593 mol) Trimethylolpropan und 33,5 g Ölsäure (0,119 mol) vorgelegt. Unter Stickstoffbegasung wurde die Mischung auf 130 °C erhitzt und unter Rühren für 2 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet. Das Produkt wurde in Form eines gelben wasserlöslichen Harzes erhalten.

Folgende Kennzahlen wurden bestimmt:

Säurezahl = 321 mg KOH/g Polymer
$M_n$ = 1400 g/mol, $M_w$ = 2800 g/mol

Polymer 9: Polykondensat aus Zitronensäuremonohydrat/TMP/Ölsäure 1,5:0,5:0,1 (Ohne Kat.)

In einen 1000 ml-Rundkolben, ausgestattet mit Rührer, Innenthermometer, Gaseinleitungsrohr und absteigendem Kühler mit Auffanggefäß wurden 186,9 g (0,88 mol) Zitronensäuremonohydrat, 79,6 g (0,593 mol) Trimethylolpropan und 16,75 g Ölsäure (0,06 mol) vorgelegt. Unter Stickstoffbegasung wurde die Mischung auf 130 °C erhitzt und unter Rühren für 2 h bei dieser Temperatur gehalten, wobei freiwerdendes Reaktions- und Kristallwasser über den absteigenden Kühler abgeschieden wurde. Anschließend wurde die Reaktion durch Abkühlen auf Raumtemperatur beendet. Das Produkt wurde in Form eines gelben wasserlöslichen Harzes erhalten.
Folgende Kennzahlen wurden bestimmt:

Säurezahl = 314 mg KOH/g Polymer
$M_n$ = 1700 g/mol, $M_w$ = 3000 g/mol

**Calciumcarbonat-Inhibierungstest**

Eine Lösung aus $NaHCO_3$, $Mg_2SO_4$, $CaCl_2$ und Polymer wird 2 h bei 70 °C im Wasserbad geschüttelt. Nach Filtration der noch warmen Lösung über einen 0,45 $\mu$m Milexfilter, wird der Ca-Gehalt des Filtrats komplexometrisch oder mittels einer $Ca^{2+}$-selektiven Elektrode ermittelt und durch Vergleich vorher / nachher die $CaCO_3$-Inhibierung in % ermittelt (siehe Formel I).

| | |
|---|---|
| $Ca^{2+}$ | 215 mg/L |
| $Mg^{2+}$ | 43 mg/L |
| $HCO_3^-$ | 1220 mg/L |
| $Na^+$ | 460 mg/L |
| $Cl^-$ | 380 mg/L |
| $SO_4^{2-}$ | 170 mg/L |
| Polymer | 5 mg/L |
| Temperatur | 70 °C |
| Zeit | 2 Stunden |
| pH | 8,0-8,5 |

$$CaCO_3\text{- Inhibierung (\%)} = \frac{mg\,(Ca2+)nach\,24\,h - mg\,(Ca2+)Blindwert\,nach\,24\,h}{mg\,(Ca2+)Nullwert - mg\,(Ca2+)Blindwert\,nach\,24\,h} * 100$$

Tabelle 1

| Beispiel | Inhibierung [%] |
|---|---|
| 1 | 40,9 |
| 2 | 48,5 |
| 3 | 55,4 |
| 4 | 32,1 |
| 5 | 36,7 |
| 6 | 28,2 |

(fortgesetzt)

| Beispiel | Inhibierung [%] |
|---|---|
| 7 | 34,1 |
| 8 | 44,1 |
| 9 | 30,5 |

Die Polymere wurden in den folgenden phosphat-freien Formulierungen PF1 und PF2, sowie in der phosphat-basierten Formulierung P1 getestet.

Tabelle 2

| | PF 1 | PF 2 | P1 |
|---|---|---|---|
| Protease | 2,5 | 2,5 | 1 |
| Amylase | 1,0 | 1,0 | 0,2 |
| Nichtionisches Tensid | 5,0 | 5 | 3 |
| Polymer | 10 | 10 | 6,5 |
| Natriumpercarbonat | 10,5 | 10,5 | 14 |
| Tetraacetylethylendiamin | 4 | 4 | 4 |
| Natriumdisilikat | 2 | 2 | 2 |
| Natriumtripolyphosphat | | | 50 |
| Natriumcarbonat | 19,5 | 19,5 | 18,8 |
| Natriumcitrat-Dihydrat | 35 | | |
| Methylglycindiessigsäure | 10 | 45 | |
| Hydroxyethan-(1,1-diphosphonsäure) | 0,5 | 0,5 | 0,5 |

Angaben in Gew.-% bezogen auf die Gesamtmenge aller Komponenten

Dabei wurden folgende Versuchsbedingungen eingehalten:

| | |
|---|---|
| Geschirrspüler: | Miele G 1222 SCL |
| Programm: | 65°C (mit Vorspülen) |
| Spülgut: | 3 Messer (WMF Tafelmesser Berlin, Monoblock) |
| | 3 Trinkglas Amsterdam 0,2L |
| | 3 FRÜHSTÜCKSTELLER "OCEAN BLAU" (MELAMIN) |
| | 3 Porzellanteller: FAHNENTELLER FLACH 19 CM |
| Anordnung: | Messer in der Besteckschublade, Gläser im oberen Korb, Teller im unteren Korb einsortiert |
| Geschirrspülmittel: | 18 g |
| Schmutzzugabe: | 50 g Ballastschmutz wird aufgetaut mit der Formulierung nach dem Vorspülen dosiert, Zusammensetzung siehe unten |
| Klarspültemperatur: | 65°C |
| Wasserhärte: | 21 °dH (Ca/Mg):HCO3 (3:1):1.35 |
| Spülcyclen: | 6; dazwischen jeweils 1 h Pause (10 min geöffnete Tür, 50 min geschloscsene Tür) |
| Auswertung: | Visuell nach 6 Spülcyclen |

Die Bewertung des Spülguts erfolgte nach 6 Cyclen in einer abgedunkelten Kammer unter Licht hinter einer Lochblende unter Verwendung einer Notenskala von 10 (sehr gut) bis 1 (sehr schlecht). Vergeben wurden sowohl Noten von 1 - 10 für Spotting (sehr viele, intensive Spots = 1 bis keine Spots = 10) als auch für Belag (1 = sehr starker Belag, 10 = kein Belag)

Zusammensetzung des Ballastschmutzes:

Stärke: 0,5 % Kartoffelstärke, 2,5 % Bratensoße
Fett: 10,2 % Margarine
Protein: 5,1 % Eigelb, 5,1 % Milch
Andere: 2,5 % Tomatenketchup, 2,5 % Senf, 0,1 % Benzoesäure, 71,4 % Wasser

Ergebnis:

Die Formulierungen mit Polymer zeichnen sich insbesondere durch ihre sehr hohe belagsinhibierende Wirkung gegenüber anorganischen und organischen Ablagerungen auf Glas, Messer, Porzellan und Kunststoffteilen aus. Weiterhin erhöhen sie die Reinigungskraft des Geschirrspülmittels und begünstigen das Ablaufen des Wassers vom Spülgut.
In den nachfolgenden Tabellen sind die addierten Noten für Belagsbildung und Spotting auf Messern und Trinkgläsern aufgeführt.

Phosphatfreie Formulierung PF 1

| Polymer | Messer (B + S) | Gläser (B + S) |
|---------|----------------|----------------|
| 2 | 17 | 13 |
| 3 | 18 | 11 |
| 5 | 18 | 11 |
| 8 | 16 | 12 |
| ohne | 8 | 7 |

Phosphatfreie Formulierung PF 2

| Polymer | Messer (B + S) | Gläser (B + S) |
|---------|----------------|----------------|
| 2 | 14 | 12 |
| 3 | 11 | 10 |
| 5 | 14 | 11 |
| 8 | 13 | 13 |
| ohne | 7 | 8 |

**Patentansprüche**

1.  Verwendung von verzweigten Polyestern erhältlich durch Polykondensation von

    a. Zitronensäure (Komponente A) mit
    b. mindestens einem Polyalkohol mit mindestens 2 und bis zu 6 Hydroxylgruppen (Komponente B) und
    c. optional einer Polycarbonsäurekomponente (Komponente C) und optional Umsetzung mit
    d. mindestens einer Komponente D ausgewählt aus der Gruppe bestehend aus: C6-C30 Alkyl-oder Alkenylcarbonsäuren, C6-C30 Alkyl-oder Alkenylalkohole, C6-C30 Alkyl-oder Alkenylamine, C6-C30 aliphatische Isocyanate während der Polykondensation oder nachträglich

    als Zusatzstoff in Spülmitteln, Reinigungsmitteln, Waschmitteln oder einer Formulierung zur Wasserbehandlung, wobei die verzweigten Polyester ein Molekulargewicht $M_n$ von 400 bis 5 000 g/mol, ein Molekulargewicht $M_w$ von 500 bis 50 000 g/mol, eine Säurezahl von 60 bis 600 mg KOH/g Polymer und eine Glasübergangstemperatur im Bereich von -50 bis +50 °C aufweisen,
    wobei das Molverhältnis von Zitronensäure zu Polyalkohol 3,5 : 1,0 bis 1,0 : 1,5 beträgt, und
    wobei gegebenenfalls der Anteil an Polycarbonsäure maximal 30 Mol-% gegenüber der eingesetzten Menge an Zitronensäure beträgt.

2. Verwendung von verzweigten Polyestern nach Anspruch 1 als Belagsinhibitoren in wasserführenden Systemen.

3. Verwendung nach den Ansprüchen 1 oder 2, wobei das Molverhältnis von (Komponente A + Komponente B) zu Komponente D bevorzugt 10 : 0,1 bis 0,5 : 0,1 beträgt.

4. Verwendung nach den Ansprüchen 1 bis 3, wobei die Komponente B ist: Ethylenglykol, 1,2-Propandiol, 1,3-Propandiol, 1,4-Butandiol, 1,5-Pentandiol, 1,6-Hexandiol sowie Diethylenglykol, Triethylenglykol, Dipropylenglykol, Tripropylenglykol, Polyethylenglykol mit einem mittleren Molekulargewicht zwischen 200 und 1000 g/mol, Glycerin, Diglycerin, Triglycerin, Trimethylolpropan, Trimethylolethan, Di(trimethylolpropan), 1,2,4-Butantriol, 1,2,6-Hexantriol, Pentaerythrit, Sucrose , Sorbit oder Glucarsäure sowie deren Polyetherole auf Basis von Ethylenoxid und/oder Propylenoxid, oder eine Mischung davon.

5. Verwendung nach den Ansprüchen 1 bis 4, wobei die Komponente B ist: Diethylenglykol oder Polyethylenglykol mit einem mittleren Molekulargewicht zwischen 200 und 1000 g/mol, Trimethylolpropan, Glycerin,Diglycerin oder Triglycerin, sowie deren Polyetherole auf Basis von Ethylenoxid und/oder Propylenoxid, oder eine Mischung davon.

6. Verwendung nach den Ansprüchen 1 bis 5, wobei die Komponente C ist: Malonsäure, Bernsteinsäure, Glutarsäure, Adipinsäure, Sebacinsäure, Octadecenylbernsteinsäureanhydrid, 1,2-, 1,3- oder 1,4-Cyclohexandicarbonsäuren (Hexahydrophthalsäuren als cis- oder trans-Verbindungen oder deren Gemische), Phthalsäure, Isophthalsäure, Terephthalsäure oder deren Anhydride oder Mono- oder Dialkylester.

7. Verwendung nach den Ansprüchen 1 bis 6, wobei die Komponente D ist: Ölsäure, Palmitinsäure, Linolsäure, Stearinsäure, Laurinsäure oder Rizinolsäure.

8. Verwendung nach den Ansprüchen 1 bis 7, wobei das Spülmittel ein Geschirrspülmittel ist.

9. Verfahren zur Herstellung von hydrophob modifizierten verzweigten Polyestern definiert gemäß einem der Ansprüche 1 und 3 bis 7, umfassend

    a. die Polykondensation der Komponenten A, B, und optional C zu verzweigten Polyestern,
    b. die Umsetzung der Komponente D während der Polykondensation oder nachträglich.

10. Hydrophob modifizierte verzweigte Polyester nach dem Verfahren gemäß Anspruch 9.

11. Reinigerformulierungen für die maschinelle Geschirrreinigung enthaltend als Komponenten, wobei der verzweigte Polyester definiert ist gemäß einem der Ansprüche 1 und 3 bis 7,

    a) 1 bis 20 Gew.-% mindestens eines verzweigten Polyesters erhältlich durch Polykondensation von Zitronensäure (Komponente A); mindestens ein Polyalkohol (Komponente B), optional Polycarbonsäurekomponente (Komponente C) und optional Komponente D,
    b) 0 bis 50 Gew.-% Komplexbildner,
    c) 0 bis 70 Gew.-% Phosphate,
    d) 0 bis 60 Gew.-% weitere Builder und Cobuilder,
    e) 0,1 bis 20 Gew.-% nichtionische Tenside,
    f) 0,1 bis 30 Gew.-% Bleichmittel und gegebenenfalls Bleichaktivatoren,
    g) 0 bis 8 Gew.-% Enzyme,
    h) 0 bis 50 Gew.-% ein oder mehrere weitere Zusatzstoffe wie anionische oder zwitterionische Tenside, Bleichkatalysatoren, Alkaliträger, polymere Dispergiermittel, Korrosionsinhibitoren, Entschäumer, Farbstoffe, Duftstoffe, Füllstoffe, Tablettensprengmittel, organische Lösungsmittel, Tablettierhillfsmittel, Disintegrationsmittel, Verdicker, Löslichkeitsvermittler und Wasser, wobei die Summe der Komponenten a) bis h) 100 Gew.-% ergibt.

12. Formulierungen zur Wasserbehandlung enthaltend als Komponenten

    a) 1 bis 95 Gew.-% mindestens eines verzweigten Polyesters erhältlich durch Polykondensation von Zitronensäure (Komponente A) mit mindestens einem Polyalkohol (Komponente B), optional einer Polycarbonsäurekomponente (Komponente C) und optional Komponente D, wobei der verzweigte Polyester definiert ist gemäß einem der Ansprüche 1 und 3 bis 7,
    b) 0 bis 80 Gew.-% Phosphonate,

c) 0 bis 98 Gew.-% Wasser,

d) 0 bis 50 Gew.-% ein oder mehrere weitere Zusatzstoffe wie Polyphosphate, Zinksalze, Molybdatsalze, organische Korrosionsinhibitoren, Biozide, Komplexbildner, Tenside oder Entschäumer,

wobei die Summe der Komponenten a) bis d) 100 Gew.-% ergibt und die Summe der Komponenten b) und d) > 0 ist.

**Claims**

1. The use of branched polyesters obtainable by polycondensation of

 a. citric acid (component A) with
 b. at least one polyalcohol having at least 2 and up to 6 hydroxyl groups (component B) and
 c. optionally a polycarboxylic acid component (component C) and
 optionally reaction with
 d. at least one component D selected from the group consisting of: C6-C30 alkyl- or alkenylcarboxylic acids, C6-C30 alkyl or alkenyl alcohols, C6-C30 alkyl- or alkenylamines, C6-C30 aliphatic isocyanates during the polycondensation or subsequently

 as additive in washing compositions, cleaners, detergents or a formulation for water treatment, where the branched polyesters have a molecular weight $M_n$ of from 400 to 5000 g/mol, a molecular weight $M_w$ of from 500 to 50 000 g/mol, an acid number of from 60 to 600 mg KOH/g of polymer and a glass transition temperature in the range from -50 to +50°C, where the molar ratio of citric acid to polyalcohol is 3.5:10 to 1.0:1.5, and where, optionally, the fraction of polycarboxylic acid is at most 30 mol% compared with the amount of citric acid used.

2. The use of branched polyesters according to claim 1 as scale inhibitors in water-conveying systems.

3. The use according to claim 1 or 2, where the molar ratio of (component A + component B) to component D is preferably 10:0.1 to 0.5:0.1.

4. The use according to claims 1 to 3, where component B is: ethylene glycol, 1,2-propanediol, 1,3-propanediol, 1,4-butanediol, 1,5-pentanediol, 1,6-hexanediol and also diethylene glycol, triethylene glycol, dipropylene glycol, tripropylene glycol, polyethylene glycol with an average molecular weight between 200 and 1000 g/mol, glycerol, diglycerol, triglycerol, trimethylolpropane, trimethylolethane, di(trimethylolpropane), 1,2,4-butanetriol, 1,2,6-hexanetriol, pentaerythritol, sucrose , sorbitol or glucaric acid, and polyetherols thereof based on ethylene oxide and/or propylene oxide, or a mixture thereof.

5. The use according to claims 1 to 4, where component B is: diethylene glycol or polyethylene glycol with an average molecular weight between 200 and 1000 g/mol, trimethylolpropane, glycerol, diglycerol or triglycerol, and polyetherols thereof based on ethylene oxide and/or propylene oxide, or a mixture thereof.

6. The use according to claims 1 to 5, where component C is: malonic acid, succinic acid, glutaric acid, adipic acid, sebacic acid, octadecenylsuccinic anhydride, 1,2-, 1,3- or 1,4-cyclohexanedicarboxylic acids (hexahydrophthalic acid as cis or trans compounds or mixtures thereof), phthalic acid, isophthalic acid, terephthalic acid or anhydrides or mono- or dialkyl esters thereof.

7. The use according to claims 1 to 6, where component D is: oleic acid, palmitic acid, linoleic acid, stearic acid, lauric acid or ricinoleic acid.

8. The use according to claims 1 to 7, where the washing composition is a dishwashing composition.

9. A process for preparing hydrophobically modified branched polyesters defined according to any one of claims 1 and 3 to 7, comprising

 a. the polycondensation of components A, B, and optionally C to give branched polyesters,
 b. the reaction of component D during the polycondensation or subsequently.

10. A hydrophobically modified branched polyester according to the process according to claim 9.

**11.** A cleaner formulation for machine dishwashing comprising as components, the branched polyester being defined according to any one of claims 1 and 3 to 7,

a) 1 to 20% by weight of at least one branched polyester obtainable by polycondensation of citric acid (component A); at least one polyalcohol (component B), optionally polycarboxylic acid component (component C) and optionally component D,
b) 0 to 50% by weight of complexing agents,
c) 0 to 70% by weight of phosphates,
d) 0 to 60% by weight of further builders and cobuilders,
e) 0.1 to 20% by weight of nonionic surfactants,
f) 0.1 to 30% by weight of bleaches and optionally bleach activators,
g) 0 to 8% by weight of enzymes,
h) 0 to 50% by weight of one or more further additives such as anionic or zwitterionic surfactants, bleach catalysts, alkali carriers, polymeric dispersants, corrosion inhibitors, antifoams, dyes, fragrances, fillers, tablet disintegrants, organic solvents, tableting auxiliaries, disintegrants, thickeners, solubility promoters and water,

where the sum of components a) to h) is 100% by weight.

**12.** A formulation for water treatment comprising as components

a) 1 to 95% by weight of at least one branched polyester obtainable by polycondensation of citric acid (component A) with at least one polyalcohol (component B), optionally a polycarboxylic acid component (component C) and optionally component D, the branched polyester being defined according to any one of claims 1 and 3 to 7,
b) 0 to 80% by weight of phosphonates,
c) 0 to 98% by weight of water,
d) 0 to 50% by weight of one or more further additives such as polyphosphates, zinc salts, molybdate salts, organic corrosion inhibitors, biocides, complexing agents, surfactants or antifoams,

where the sum of components a) to d) is 100% by weight and the sum of components b) and d) is > 0.

## Revendications

**1.** Utilisation de polyesters ramifiés pouvant être obtenus par polycondensation de

a. de l'acide citrique (composant A) avec
b. au moins un polyalcool contenant au moins 2 et jusqu'à 6 groupes hydroxyle (composant B), et
c. éventuellement un composant acide polycarboxylique (composant C) et éventuellement mise en réaction avec
d. au moins un composant D choisi dans le groupe constitué par : les acides alkyl- ou alcénylcarboxyliques en C6-C30, les alcools alkyl- ou alcényliques en C6-C30, les alkyl- ou alcénylamines en C6-C30, les isocyanates aliphatiques en C6-C30, pendant la polycondensation ou ultérieurement,

en tant qu'additif dans des produits de rinçage, des produits de nettoyage, des produits de lavage ou une formulation pour le traitement de l'eau,
les polyesters ramifiés présentant un poids moléculaire $M_n$ de 400 à 5 000 g/mol, un poids moléculaire $M_w$ de 500 à 50 000 g/mol, un indice d'acidité de 60 à 600 mg KOH/g de polymère et une température de transition vitreuse dans la plage allant de -50 à +50 °C,
le rapport molaire entre l'acide citrique et le polyalcool étant de 3,5:1,0 à 1,0:1,5, et
la proportion d'acide polycarboxylique étant éventuellement d'au plus 30 % en moles par rapport à la quantité d'acide citrique utilisée.

**2.** Utilisation de polyesters ramifiés selon la revendication 1 en tant qu'inhibiteurs de dépôts dans des systèmes de conduction d'eau.

**3.** Utilisation selon les revendications 1 ou 2, dans laquelle le rapport molaire (composant A + composant B) sur composant D est de préférence de 10:0,1 à 0,5:0,1.

**4.** Utilisation selon les revendications 1 à 3, dans laquelle le composant B est : l'éthylène glycol, le 1,2-propanediol, le 1,3-propanediol, le 1,4-butanediol, le 1,5-pentanediol, le 1,6-hexanediol, ainsi que le diéthylène glycol, le triéthylène glycol, le dipropylène glycol, le tripropylène glycol, le polyéthylène glycol ayant un poids moléculaire moyen compris entre 200 et 1 000 g/mol, la glycérine, la diglycérine, la triglycérine, le triméthylolpropane, le triméthyloléthane, le di(triméthylolpropane), le 1,2,4-butanetriol, le 1,2,6-hexanetriol, le pentaérythritol, le sucrose, le sorbitol ou l'acide glucarique, ainsi que leurs polyéthérols à base d'oxyde d'éthylène et/ou d'oxyde de propylène, ou un mélange de ceux-ci.

5. Utilisation selon les revendications 1 à 4, dans laquelle le composant B est : le diéthylène glycol ou le polyéthylène glycol ayant un poids moléculaire moyen compris entre 200 et 1 000 g/mol, le triméthylolpropane, la glycérine, la diglycérine ou la triglycérine, ainsi que leurs polyéthérols à base d'oxyde d'éthylène et/ou d'oxyde de propylène, ou un mélange de ceux-ci.

6. Utilisation selon les revendications 1 à 5, dans laquelle le composant C est : l'acide malonique, l'acide succinique, l'acide glutarique, l'acide adipique, l'acide sébacique, l'anhydride de l'acide octadécénylsuccinique, les acides 1,2-, 1,3- ou 1,4-cyclohexanedicarboxyliques (acides hexahydrophtaliques en tant que composés cis ou trans ou leurs mélanges), l'acide phtalique, l'acide isophtalique, l'acide téréphtalique ou leurs anhydrides ou esters mono- ou dialkyliques.

7. Utilisation selon les revendications 1 à 6, dans laquelle le composant D est : l'acide oléique, l'acide palmitique, l'acide linoléique, l'acide stéarique, l'acide laurique ou l'acide ricinoléique.

8. Utilisation selon les revendications 1 à 7, dans laquelle le produit de rinçage est un produit vaisselle.

9. Procédé de fabrication de polyesters ramifiés modifiés hydrophobiquement définis selon l'une quelconque des revendications 1 et 3 à 7, comprenant :

    a. la polycondensation des composants A, B et éventuellement C en polyesters ramifiés,
    b. la mise en réaction du composant D pendant la polycondensation ou ultérieurement.

10. Polyesters ramifiés modifiés hydrophobiquement par le procédé selon la revendication 9.

11. Formulations détergentes pour le lavage de la vaisselle en machine, contenant en tant que composants, le polyester ramifié étant défini selon l'une quelconque des revendications 1 et 3 à 7,

    a) 1 à 20 % en poids d'au moins un polyester ramifié pouvant être obtenu par polycondensation d'acide citrique (composant A) ; d'au moins un polyalcool (composant B), éventuellement d'un composant acide polycarboxylique (composant C) et éventuellement d'un composant D,
    b) 0 à 50 % en poids de complexants,
    c) 0 à 70 % en poids de phosphates,
    d) 0 à 60 % en poids d'autres adjuvants et co-adjuvants,
    e) 0,1 à 20 % en poids de tensioactifs non ioniques,
    f) 0,1 à 30 % en poids d'agents blanchissants et éventuellement d'activateurs de blanchiment,
    g) 0 à 8 % en poids d'enzymes,
    h) 0 à 50 % en poids d'un ou de plusieurs additifs supplémentaires tels que des tensioactifs anioniques ou zwitterioniques, des catalyseurs de blanchiment, des composés alcalins, des dispersants polymères, des inhibiteurs de corrosion, des agents démousseurs, des colorants, des parfums, des charges, des désintégrants de comprimés, des solvants organiques, des adjuvants de pastillage, des agents délitants, des épaississants, des promoteurs de solubilité et de l'eau,

    la somme des composants a) à h) étant de 100 % en poids.

12. Formulations pour le traitement de l'eau, contenant en tant que composants :

    a) 1 à 95 % en poids d'au moins un polyester ramifié pouvant être obtenu par polycondensation d'acide citrique (composant A) avec au moins un polyalcool (composant B), éventuellement un composant acide polycarboxylique (composant C) et éventuellement d'un composant D, le polyester ramifié étant défini selon l'une quelconque des revendications 1 et 3 à 7,
    b) 0 à 80 % en poids de phosphonates,

c) 0 à 98 % en poids d'eau,

d) 0 à 50 % en poids d'un ou de plusieurs autres additifs, tels que des polyphosphates, des sels de zinc, des sels de molybdate, des inhibiteurs de corrosion organiques, des biocides, des complexants, des tensioactifs ou des agents démousseurs,

la somme des composants a) à d) étant de 100 % en poids et la somme des composants b) et d) étant > 0.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9322362 A
- US 5652330 A
- WO 2012028496 A
- WO 9216493 A
- US 8182796 B
- EP 851023 A

- DE 19819187 A
- US 5422028 A
- US 5294362 A
- US 5292447 A
- US 5039447 A

**In der Beschreibung aufgeführte Nicht-Patentliteratur**

- **P.J. FLORY.** *J. Am. Chem. Soc.,* 1952, vol. 74, 2718
- **H. FREY et al.** *Chemistry - A European Journal,* 2000, vol. 6 (14), 2499

- **H. FREY et al.** Degree of Branching. *Acta Polym,* 1997, vol. 48, 30-35
- Liquid Extraction -Apparatus. Ullmann's Encyclopedia of Industrial Chemistry. Electronic Release, 1999